# EUROPÄISCHE PATENTANMELDUNG

(11) **EP 4 553 013 A1**
(43) Veröffentlichungstag der Anmeldung: **14.05.2025**
(21) Anmeldenummer: 23209079.5
(22) Anmeldetag: 10.11.2023
(51) Int. Cl.: B65G 47/71, B65G 47/76

(54) **SEPARIERFÖRDERER ZUM ZUFÜHREN VON MIT SCHÜTTGUT BEFÜLLTEN VERPACKUNGSEINHEITEN ZU EINEM PALETTIERER**

(71) Anmelder: BEUMER Group GmbH & Co. KG, 59269 Beckum (DE)
(72) Erfinder: Osthues, Thomas, 48317 Drensteinfurt (DE); Lüke, Christian, 59348 Lüdinghausen (DE)
(74) Vertreter: Angerhausen, Christoph

(57) **Zusammenfassung**

Die Erfindung betrifft einen Separierförderer für einen Palettierer, wobei der Separierförderer eine stromaufwärtige Eingangsseite und eine stromabwärtige Ausgangsseite aufweist und zum Fördern von Verpackungseinheiten in Förderrichtung von der Eingangsseite in Richtung der Ausgangsseite eingerichtet ist, und mit einem Verteilschwert, das sich im Wesentlichen in Förderrichtung längs des Separierförderers erstreckt und zum seitlichen Auslenken der Verpackungseinheiten eine erste Verstellachse aufweist, bei welcher das Verteilschwert im Wesentlichen quer zur Förderrichtung verstellbar ist, wobei das Verteilschwert eine zweite Verstellachse aufweist, in welcher zumindest ein Abschnitt des Verteilschwerts im Wesentlichen längs des Separierförderers verstellbar ist.

## Beschreibung

Die Erfindung geht aus von einem Separierförderer für einen Palettierer, wobei der Separierförderer eine stromaufwärtige Eingangsseite und eine stromabwärtige Ausgangsseite aufweist und zum Fördern von Verpackungseinheiten in Förderrichtung von der Eingangsseite in Richtung der Ausgangsseite eingerichtet ist, und mit einem Verteilschwert, das sich im Wesentlichen in Förderrichtung längs des Separierförderers erstreckt und zum seitlichen Auslenken der Verpackungseinheiten eine erste Verstellachse aufweist, bei welcher das Verteilschwert im Wesentlichen quer zur Förderrichtung verstellbar ist. Ein derartiger Separierförderer ist bereits bekannt aus der Druckschrift EP 4 219 353 A1.

Ein Separierförderer umfasst ein Förderband, beispielsweise einen Gurtförderer oder Gliederbandförderer, auf dem die Verpackungseinheiten transportiert werden. Auf dem Förderband ist ein Verteilschwert angeordnet. Ein Verteilerschwert hat die Aufgabe, einen Strom von Verpackungseinheiten, beispielsweise Säcke (Ventilsäcke oder Ofensäcke), Kartons oder Gebinde, auf mehrere Spuren, beispielsweise eine linke und eine rechte Spur aufzuteilen. Je höher der Durchsatz von Säcken werden soll beziehungsweise je mehr Säcke pro Zeit das Verteilerschwert passieren und von diesem verteilt werden müssen, desto geringer wird der Abstand zwischen den einzelnen Säcken. Ein Umschwenken des Verteilerschwerts von links nach rechts um die Drehachse und umgekehrt ist ab einer gewissen Sackanzahl (> ca. 4000 Sack/h) jedoch nur noch mit einem Anhalten des vorgeschalteten Taktbands möglich. Dies wiederum mindert den Sackstrom auf den Taktbändern.

Es ist daher die Aufgabe der vorliegenden Erfindung, den genannten Nachteil zu beseitigen und ein Verteilerschwert zu entwickeln, das kein Anhalten des vorgeschalteten Taktbands erforderlich macht, so dass eine Leistungssteigerung des Palettierers erzielt wird und mehr Säcke pro Stunde palettiert werden können.

Die Aufgabe wird gelöst mit den Merkmalen des unabhängigen Anspruchs. Vorteilhafte Ausgestaltungen der Erfindung sind jeweils in den Unteransprüchen angegeben.

Demgemäß ist vorgesehen, dass das Verteilschwert eine zweite Verstellachse aufweist, in welcher zumindest ein Abschnitt des Verteilschwerts im Wesentlichen längs des Separierförderers verstellbar ist.

Das Verteilerschwert verfügt somit über eine erste Verfahrrichtung um eine Drehachse (Schwenken links/rechts) und zusätzlich wird der vordere Verteilerschwertbereich um eine zweite Verfahrrichtung in Förderrichtung ergänzt. Es kann vorgesehen sein, dass diese zweite Verfahrbewegung in Förderrichtung das Verteilerschwert vor dem Sackstrom in dem Moment des Umschwenkens zurückzieht und nach dem Umschwenken das Verteilerschwert wieder auf seine ganze Länge ausfährt, so dass die absolute Länge des Verteilerschwertbereichs veränderbar ist.

Alternativ kann vorgesehen sein, dass zur Verkürzung des Verteilschwerts relativ zur Eingangsseite des Separierförderers der vordere Verteilerschwertbereich in vertikaler Richtung angehoben wird.

Über ein Taktband, das in Förderrichtung gesehen vor dem Verteilschwert bzw. dem Separierförderer angeordnet ist, werden die Verpackungseinheiten dem Verteilschwert bzw. dem Separierförderer zugeführt. Das Taktband weist eine Transportspur auf. Bei einem Taktband kann es sich um ein Förderband handeln, beispielsweise einen angetriebenen Gurtförderer oder Gliederbandförderer, der die Zufuhr der Verpackungseinheiten steuert bzw. reguliert. Das Verteilerschwert des Separierförderers kann dazu eingerichtet sein, mindestens zwei in Förderrichtung gesehen hinter dem Verteilerschwert liegende Transportspuren zu erzeugen. Es kann vorgesehen sein, dass dem Separierförderer nachgelagert ein Ausrichtförderer angeordnet ist, welcher dazu eingerichtet ist, die transportieren Säcke auf dem Förderer senkrecht zur Förderebene nach Bedarf zu drehen, so dass in Abhängigkeit des zu erzeugenden Lagenbilds ein Teil der Säcke in Längs- und der andere Teil der Säcke in Querausrichtung den Ausrichtförderer verlassen. Der Separierförderer und der Ausrichtförderer können so zueinander ausgerichtet sein, dass die an den Ausrichtförderer übergebenen Säcke jeweils unmittelbar entlang einer linken oder rechten Berandung des Ausrichtförderers transportiert werden. Der Ausrichtförderer kann zum Rotieren der Säcke, insbesondere um 90°, eine für die linke und eine für die rechte Transportspur vorgesehene Drehvorrichtung aufweisen. Als Drehvorrichtungen können Drehstab-Drehvorrichtungen eingesetzt werden. Diese erfordern eine zum Rand hin orientierte Transportachse.

In Förderrichtung gesehen hinter den Ausrichtförderern können weitere Förderbänder angeordnet sein, so genannte Zeilenbänder. Es kann ein Zeilenband eingesetzt werden oder mehrere Zeilenbänder. Vorzugsweise werden zwei Zeilenbänder eingesetzt, die sich an die linke und rechte Transportspur der Ausrichtförderer anschließen.

Die Erfindung weist insbesondere die Vorteile auf, dass es die zusätzliche Verfahrbewegung ermöglicht, den Sackstrom am Taktband kontinuierlich fließen zu lassen. Dadurch ist ein Stoppen des Sackstromes auf dem vorgeschalteten Taktband nicht zwingend erforderlich. Ferner kann ein größerer Sackstrom erreicht werden, ohne die Bandgeschwindigkeiten zu hoch anheben zu müssen.

Es kann vorgesehen sein, dass das Verteilschwert ein stromabwärtiges Ende aufweist, an welchem das Verteilschwert um eine senkrecht zur Förderebene ausgerichtete, beispielsweise mittig zur Quererstreckung des Separierförderers angeordnete, Schwenkachse verschwenkbar fixiert ist. Ferner kann das Verteilschwert ein zur Eingangsseite weisendes stromaufwärtiges Ende aufweisen, welches gegenüber dem stromabwärtigen Ende im Wesentlichen quer zur Förderrichtung mittels eines Schwenkantriebs verschwenkbar ist.

Es kann vorgesehen sein, dass der verstellbare Abschnitt des Verteilschwerts mittels eines Teleskopierantriebs in Längsrichtung teleskopierbar ist. Insbesondere kann vorgesehen sein, dass das Verteilschwert einen fixierten ersten Abschnitt aufweist, welcher nicht in Längsrichtung verstellbar ist, und einen zweiten Abschnitt aufweist, welcher gegenüber dem ersten Abschnitt telekopierbar ist. Es ist denkbar, dass sich der fixierte erste Abschnitt von der Schwenkachse stromaufwärts erstreckt. Ferner ist denkbar, dass der telekopierbare zweite Abschnitt, bzw. eine Verteilschwertspitze, an die Eingangsseite des Separierförderers angrenzt. Die Verteilschwertspitze kann jedoch so ausgebildet sein, dass die Verteilschwertspitze sowohl im ausgefahrenen als auch im eingefahrenen Zustand um einen Mindestabstand von der Eingangsseite des Separierförderers beabstandet ist und beispielsweise nicht über den Fördergurt hinausragt.

Der Separierförderer kann ferner eine Steuerung aufweisen, mittels welcher der Schwenkantrieb so angesteuert ist, dass das Verteilschwert zwischen einer ersten Stellung, in welcher das Verteilschwert zu einer ersten Seite des Separierförderers verschwenkt ist, und einer zweiten Stellung, in welcher das Verteilschwert zu einer der ersten Seite des Separierförderers gegenüberliegenden zweiten Seite des Separierförderers verschwenkt ist, verstellt ist. Ferner kann der Teleskopierantrieb mittels der Steuerung so angesteuert werden, dass das Verteilschwert in der ersten und der zweiten Stellung eine erste Längserstreckung, und in einer zwischen der ersten und der zweiten Stellung gelegenen Position eine zweite Längserstreckung aufweist. Die Steuerung kann einen Frequenzumrichter und/oder ein PLC (Programmable Logic Controller) aufweisen. Die Steuerung kann dazu eingerichtet sein, beide Verfahrbewegungen (Schwenken links/rechts und Einkürzen der absoluten Länge des Verteilerschwertbereichs) sowie die Taktgeschwindigkeit des Sackstroms aufeinander abzustimmen bzw. zu synchronisieren. Die Steuerung kann entsprechend ferner dazu eingerichtet sein, eine Zuführgeschwindigkeit des dem Separierförderer vorgeschalteten Taktförderers einzustellen.

Es kann vorgesehen sein, dass die erste Längserstreckung des Verteilschwerts größer ist als die zweite Längserstreckung des Verteilschwerts. Dadurch kann das Verteilschwert, wenn es sich in einer Randposition befindet, eine größere Länge aufweisen, als wenn es sich in einer Mittenposition zwischen den beiden Randpositionen befindet.

Es kann beispielsweise vorgesehen sein, dass der Teleskopierantrieb eine konstante Verstellgeschwindigkeit des Verteilschwerts aufweist. Ferner kann eine Richtungsumkehr der Verstellrichtung des Teleskopierantriebs bei Überschreiten der Mittenposition des Verteilschwerts vorgesehen sein. Dadurch kann das Verteilschwert im Zuge des Verschwenkens ausgehend von einer Randposition von seiner Maximallänge bis zum Erreichen der Mittenposition auf seine Minimallänge teleskopiert und bei Überschreiten der Mittenposition von der Minimallänge bis zum Erreichen der gegenüberliegenden Randposition zurück auf seine Maximallänge teleskopiert werden.

Beispielsweise kann das Verteilschwert in Längsrichtung um einen Verstellweg zwischen 50-150 mm verstellbar sein.

Der zweite bzw. der verstellbare Verteilschwertabschnitt kann entlang einer sich in Längsrichtung des Verteilschwerts erstreckenden Führungsschiene geführt sein. Die Führungsschiene kann an einer mit dem Verteilschwert verbundenen Halterung montiert sein. Der verstellbare Verteilschwertabschnitt kann entsprechende Führungsschuhe aufweisen, welche beweglich gekoppelt entlang der Führungsschiene verfahrbar sind.

Es kann vorgesehen sein, dass der zweite Verteilschwertabschnitt über ein Verbindungsstück mit dem Teleskopierantrieb verbunden ist. Das Verbindungsstück kann sich durch eine längliche Aussparung der Halterung des Verteilschwerts hindurcherstrecken und entlang der Aussparung verfahrbar sein. Der Teleskopierantrieb kann eine Kolben-Zylinder-Einheit aufweisen, welche als Elektrozylinder, als Pneumatikzylinder oder als Hydraulikzylinder ausgebildet sein kann. Alternativ kann der Teleskopierantrieb als Servoantrieb ausgebildet sein. Das Verstellen des teleskopierbaren Elements kann dabei in einer kontinuierlichen oder diskontinuierlichen Bewegung erfolgen. Die Art der Bewegung ist abhängig von der Aktorik (z.B. Elektrozylinder, als Pneumatikzylinder oder als Hydraulikzylinder) des teleskopierbaren Elements.

Weitere Einzelheiten der Erfindung werden anhand der nachstehenden Figuren erläutert. Dabei zeigt:
- Fig. 1: eine Draufsicht auf eine Ausführungsform des erfindungsgemäßen Separierförderers;
- Fig. 2: eine perspektivische Ansicht einer Ausführungsform des erfindungsgemäßen Separierförderers;
- Fig. 3a: eine perspektivische Ansicht einer Ausführungsform des Verteilschwerts im ausgefahrenen Zustand;
- Fig. 3b: eine perspektivische Ansicht einer Ausführungsform des Verteilschwerts im eingefahrenen Zustand;
- Fig. 4a: eine Seitenansicht einer Ausführungsform des Verteilschwerts im ausgefahrenen Zustand;

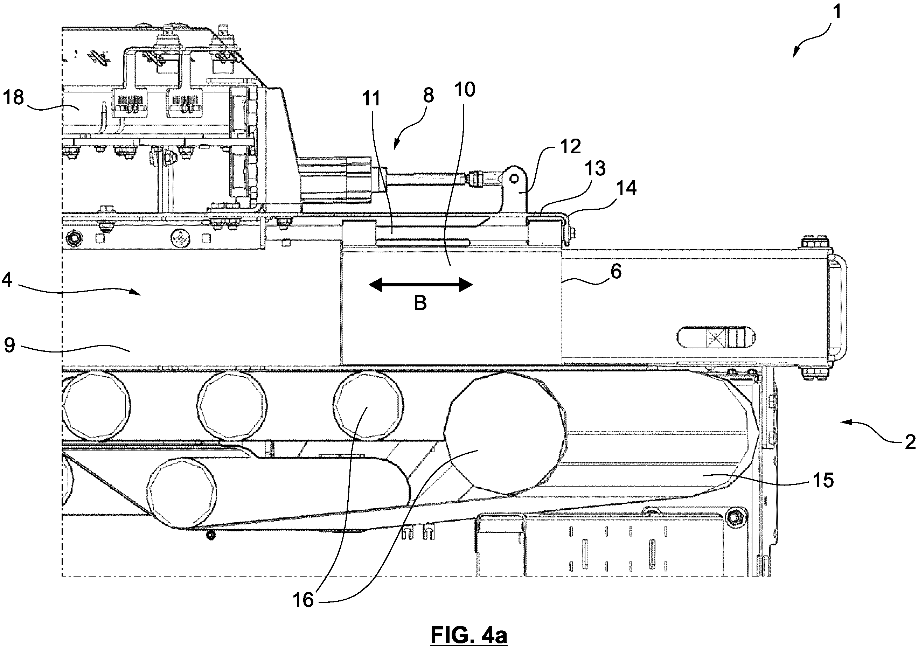

- Fig. 4a: eine Seitenansicht einer Ausführungsform des Verteilschwerts im eingefahrenen Zustand.

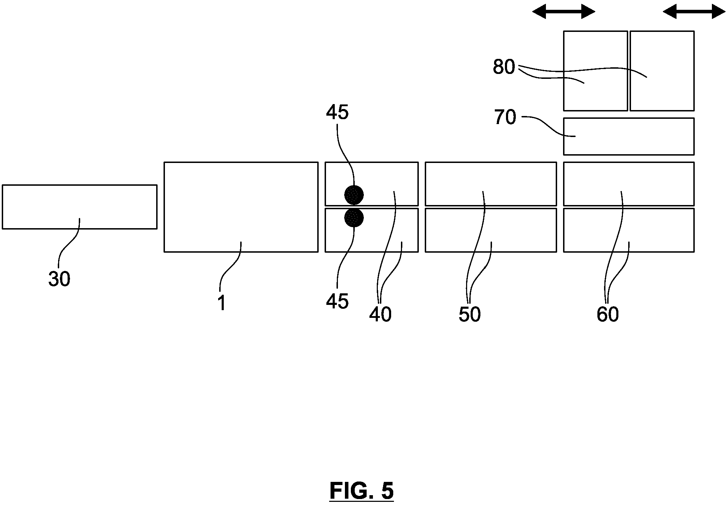

- Fig. 5: eine schematische Draufsicht auf eine Ausführungsform des erfindungsgemäßen Separierförderers in einem Palettierer.

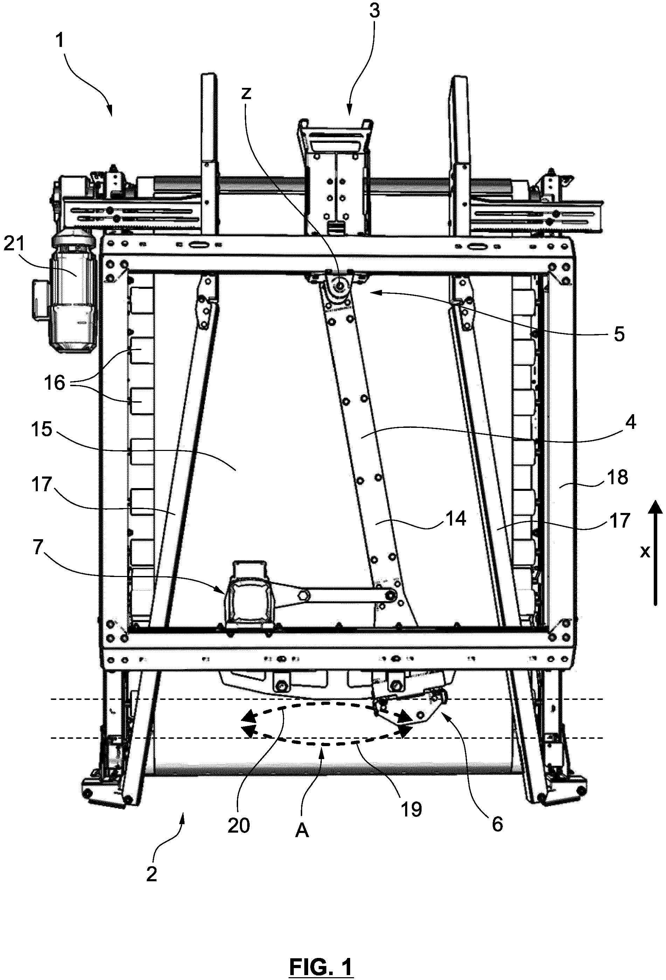

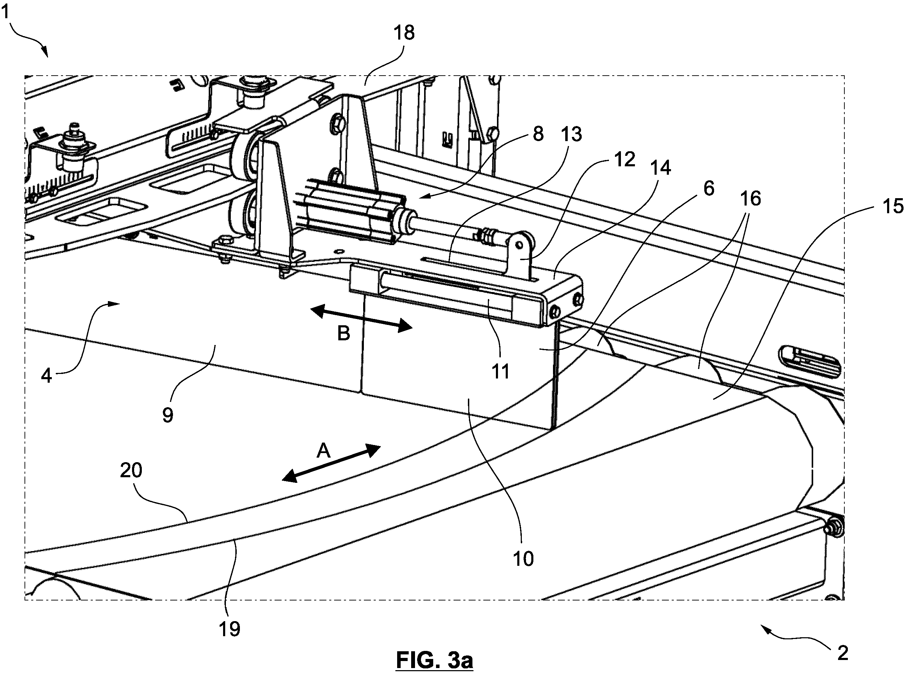

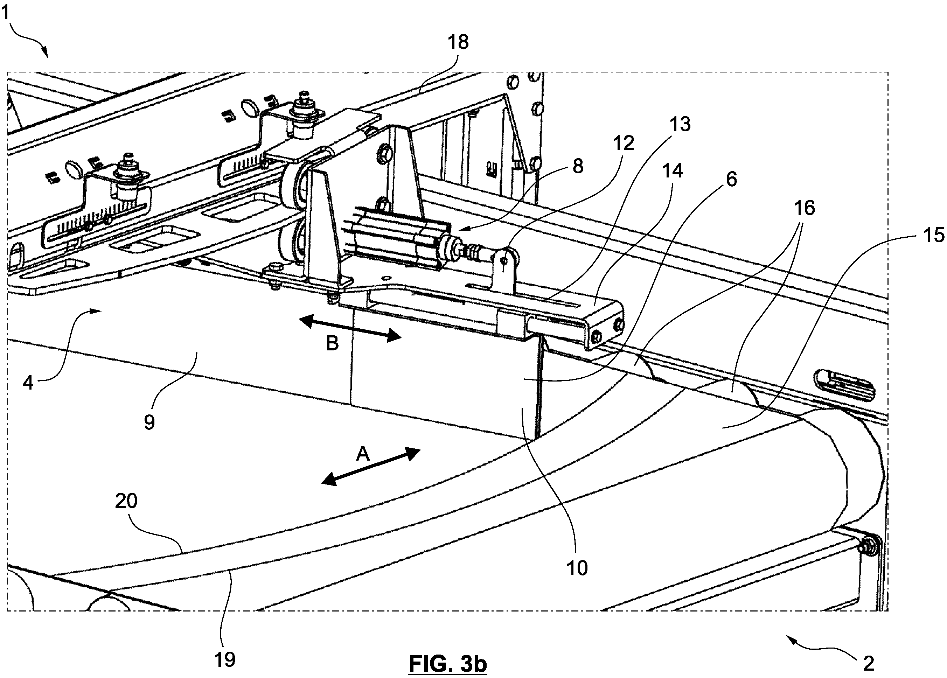

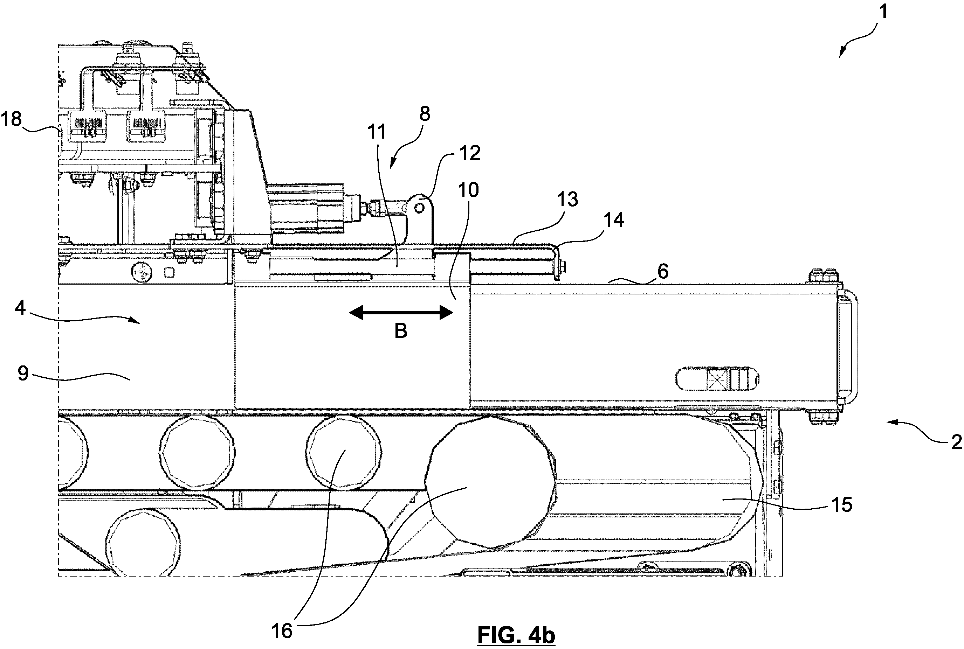

Figur 1 zeigt eine Draufsicht auf einen Separierförderer 1, welche eine Eingangsseite 2 und eine Ausgangsseite 3 aufweist, wobei eingangsseitig Säcke mittels eines nicht dargestellten vorgeschalteten Taktförderer angeliefert und auf den Separierförderer 1 aufgegeben werden. Der Separierförderer 1 weist einen mittels einer Mehrzahl Rollen 16 geführten Fördergurt 15 auf, welcher mittels eines Förderantriebs 21 angetrieben wird. Der Separierförderer 1 weist ferner zwei Seitenbegrenzungen 17 auf, welche die Fahrspur in Förderrichtung X kontinuierlich verjüngen. Zwei ausgangsseitige Abschnitte der Seitenbegrenzungen 17 schließen sich an den sich verjüngenden Bereich an und sind parallel zueinander ausgerichtet. Der Separierförderer 1 weist ein Verteilschwert 4 auf, welches mittig zwischen den Seitenbegrenzungen 17 angeordnet und mittels eines Halterahmens 18 gehalten wird und den Förderweg in eine rechte und eine linke Fahrspur aufteilt. Das Verteilschwert 4 dient zum Verteilen von eingangsseitig aufgegebenen Säcken auf die linke und die rechte Fahrspur, in Abhängigkeit davon, welches Lagenbild mittels des nachgeschalteten Palettierers (nicht dargestellt) erzeugt werden soll. Die mittig auf den Separierförderer 1 treffenden Säcke werden je nach Stellung des Verteilschwerts 4 auf die linke oder die rechte Spur geleitet und sobald sich die Säcke seitlich neben dem Verteilschwert 4 befinden mittels Verschwenken des Verteilschwerts 4 in Richtung der jeweiligen Seitenbegrenzung 17 geschoben. Das Verteilschwert 4 ist an seinem stromabwärtigen Ende 5 gelenkig gelagert und um eine Schwenkachse Z verschwenkbar. Der sich von der Schwenkachse Z in Richtung der Eingangsseite 2 erstreckende Schwenkarm ist mittels eines am stromaufwärtigen Ende des Verteilschwerts 4 angeordneten Schwenkantriebs 7 entlang einer Verstellkulisse zwischen einer linken und einer rechten Position verschwenkbar, wodurch eine erste Verstellrichtung A realisiert ist. Das Verteilschwert 4 weist ein senkrecht zur Förderebene ausgerichtetes Verteilelement sowie eine horizontal auf dem Verteilelement montierte Halterung 14 auf. Der rotatorische Schwenkantrieb 7 ist über eine Koppelstange mit der Halterung 14 verbunden. Mittels der erfindungsgemäßen Teleskopierfunktion (im Detail dargestellt in den Figuren 3 und 4) ist es möglich, die Verteilschwertspitze 6 in Längsrichtung des Schwerts zu verstellen, so dass anstelle eines konvexen Verfahrwegs 19 quer zur Förderoberfläche ein konkaver Verfahrweg 20 des Verteilschwerts realisiert wird. Dadurch ist es möglich, das Verteilschwert 4 in einer mittigen Position zwischen den äußeren Verteilschwertstellungen von einem eintreffenden Sack wegzuziehen und sobald sich das Verteilschwert 4 neben dem eintreffenden Sack befindet wieder auszufahren. Dadurch kann der Abstand zwischen eintreffenden Säcken reduziert und damit der Takt bzw. der Durchsatz erhöht werden.

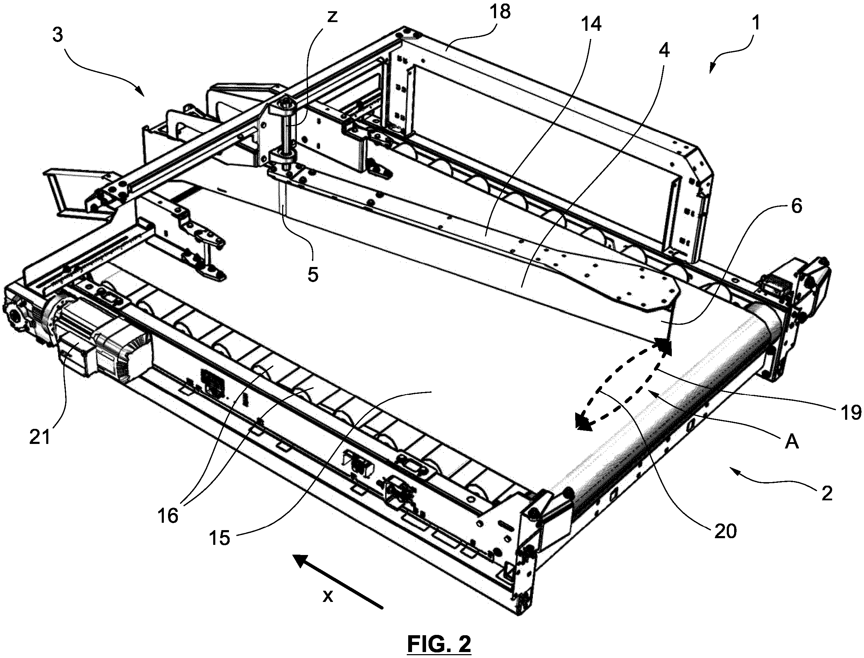

In Figur 2 ist eine perspektivische Ansicht des Separierförderers 1 dargestellt. Zu erkennen ist insbesondere die stromabwärtige Schwenkachse Z des Verteilschwerts Z und deren Befestigung am Halterahmen 18. Ferner ist zu erkennen, dass das Verteilschwert aus einem vertikalen, an den Gurtförderer angrenzenden, Verteilelement und der darauf monierten, horizontal ausgerichteten Halterung 14 besteht. Auch der Unterschied zwischen den Verfahrwegen 19, 20 der Verteilschwertspitze 6 im teleskopierten und im nicht teleskopierten Zustand ist deutlich dargestellt.

Die Figuren 3a-4b zeigen das Verteilschwert 4 zum einen im ausgefahrenen Zustand (Figuren 3a und 4a) und zum anderen im eingefahrenen Zustand (Figuren 3b und 4b), wobei die Figuren 3a und 3b jeweils perspektivische Ansichten und die Figuren 4a und 4b jeweils Seitenansichten zeigen. Insbesondere dargestellt ist dabei der vordere Verteilerschwertbereich bzw. der zweite Verteilschwertabschnitt 10, der gegenüber dem ersten Verteilschwertabschnitt 9 um ca. 50 - 150 mm teleskopierbar ist. Der teleskopierbare Abschnitt 10 ist entlang einer Führungsstange 11 in und entgegen der Förderrichtung X beweglich. In Figur 3a bzw. Figur 4a hat das Verteilschwert 4 seine maximale Länge im ausgefahrenen Zustand, in Figur 3b bzw. Figur 4b ist das Verteilschwert 4 im eingefahrenen Zustand und hat seine minimale Länge. Über das Verbindungsstück 12 ist das teleskopierbare Element 10 fest mit dem Teleskopierantrieb 8, welcher als Kolben-Zylinder-Einheit ausgebildet ist, verbunden. Das Verbindungsstück 12 ist entlang einer länglichen Aussparung 13 der Halterung 14 des Verteilerschwerts 4 verfahrbar. In Figur 3a bzw. Figur 4a ist die Kolbenstange aus dem Zylinder ausgefahren und in Figur 3b bzw. Figur 4b in den Zylinder eingefahren. Wie gut zu erkennen ist, weist das Verteilschwert 4 zwei Verstellrichtungen auf, zum einen eine Verstellrichtung A im Wesentlichen quer zur Förderrichtung X und eine Verstellrichtung B im Wesentlichen längs der Förderrichtung. Die Antriebe 7 und 8 des Verteilschwerts werden mittels einer Steuerung so angesteuert, dass das teleskopierbare Element 10 im Zuge des Verschwenkens des Verteilschwerts 4 entlang der ersten Verstellrichtung A bei Erreichen der mittleren Stellung maximal in Verstellrichtung B zurückgezogen ist und in beiden Endlagen links und rechts quer zur Förderrichtung X in Verstellrichtung B maximal ausgefahren ist. Das Verstellen des teleskopierbaren Elements 10 kann dabei in einer kontinuierlichen oder diskontinuierlichen Bewegung erfolgen. Die Art der Bewegung ist abhängig von der Aktorik (z.B. Elektrozylinder, Pneumatikzylinder oder Hydraulikzylinder) des teleskopierbaren Elements. Die Aufteilung auf die rechte oder linke Spur erfolgt je nach dem ausgewähltem Lagenbild. Die Signale zum Ansteuern des Teleskopierantriebs zum Ein- und Ausfahren des Verteilschwerts 4 kommen aus dem Regelkreis einer übergeordneten PLC-Steuerung.

Figur 5 zeigt eine schematische Gesamtansicht eines Palettierers, welcher einen erfindungsgemäßen Separierförderer 1 aufweist. Der Palettierer weist ein dem Separierförderer vorgeschaltetes Taktband 30 auf, welches dem Separierförderer 1 Produkte und/oder Gebinde zuführt. Dem Separierförderer 1 nachgeschaltet sind zwei parallele Ausrichtförderer bzw. Richtbänder 40, welche jeweils eine Drehstab-Drehvorrichtung 45 aufweisen. Den Richtbändern 40 nachgeordnet sind zwei Lagenbänder 60 mit Abschiebern, um eine Lage auf den nachfolgenden Ablegetisch 80 zu schieben. Zwischen den Lagenbändern 60 und dem Ablegetisch 80 ist ein Balkon-Blech 70 angeordnet, welches zur Vorpositionierung oder als Puffereinheit dient. Palettierer dienen dazu, Produkte und/oder Gebinde (z.B. Säcke, Kartons) auf einem Ladungsträger (z.B. Palette) zu palettieren. Der Ladungsträger befindet sich während der Palettierung auf einem Hubwagen mit Rollenbahn oder Gurtförderer unterhalb des Ablegetischs 80 und kann mit Hilfe des Antriebsstrangs des Hubwerks bestehend aus Antriebswelle, Getriebe, Motor und Zugmittel (z.B. Ketten), vertikal verfahren werden. Der Ablegetisch 80 besteht aus zwei Teilen, die eine offene und eine geschlossene Position einnehmen können. Auf den Lagenbändern 60 werden aus mehreren Produkten und/oder Gebinden eine Lage oder eine Zeile gebildet. Bevor ein Produkt / Gebinde auf das Lagenband 60 gelangt, wird es über mehrere Förderer transportiert, die dem Lagenband vorgeschaltet sind. Dies ist die lagenbildende Ebene, die z.B. aus Taktbändern 30, Richtbändern 40 und Zeilenbändern 50 bestehen kann. Für die überlappende Anordnung der Lagen auf dem Ladungsträger ist es notwendig, je nach Art des Lagenverbands einige Produkte / Gebinde längs, und andere quer zuzuführen. Daher werden die Produkte / Gebinde vor dem Erreichen des Lagenbands 60 dementsprechend mittels einer Drehvorrichtung 45 gedreht. Ist eine Lage oder eine Zeile vollständig, wird mit Hilfe eines (nicht dargestellten) Querabschiebers die Lage oder die Zeile vom Lagenband 60 auf den geschlossenen Ablegetisch 80 geschoben. Wird eine Lage nacheinander aus mehreren Zeilen gebildet, werden so lange Zeilen vom Lagenband 70 auf den geschlossenen Ablegetisch 80 geschoben, bis die Lage vollständig auf dem geschlossenen Ablegetisch 80 liegt. Die Andrücker sind in Position, um die Lage gepresst zu halten, dann öffnet sich der Ablegetisch 80 und die fertige Lage wird auf die Hubwerksrollenbahn beziehungsweise auf eine Palette oder auf einen anderen Ladungsträger (slip sheet, tray, etc.) auf der Hubwerksrollenbahn gelegt. Das Hubwerk fährt nach unten und der Ablegetisch 80 wird wieder geschlossen. Anschließend fährt das Hubwerk wieder nach oben, und presst die gesamte obere Lage des Stückgutstapels mit einem fest vorgegebenen oder variablen Fahrweg unter dem geschlossenen Ablegetisch an. Hierdurch wird die obere Lage egalisiert.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 1: Separierförderer
- 2: Eingangsseite
- 3: Ausgangsseite
- 4: Verteilschwert
- 5: Stromabwärtiges Ende
- 6: Stromaufwärtiges Ende/Verteilschwertspitze
- 7: Schwenkantrieb
- 8: Teleskopierantrieb
- 9: Erster Verteilschwertabschnitt
- 10: Zweiter Verteilschwertabschnitt
- 11: Führungsschiene
- 12: Verbindungsstück
- 13: Aussparung
- 14: Halterung
- 15: Fördergurt
- 16: Rollen
- 17: Seitenbegrenzung
- 18: Halterahmen
- 19: Verfahrweg Verteilschwertspitze ohne Teleskopierung
- 20: Verfahrweg Verteilschwertspitze mit Teleskopierung
- 21: Förderantrieb
- 30: Taktband
- 40: Ausrichtförderer
- 45: Drehstab-Drehvorrichtung
- 50: Zeilenband
- 60: Lagenband
- 70: Balkon-Blech
- 80: Ablegetisch
- A: erste Verstellrichtung
- B: zweite Verstellrichtung
- X: Förderrichtung
- Z: Schwenkachse

## Patentansprüche

1. Separierförderer (1) für einen Palettierer;
wobei der Separierförderer (1) eine stromaufwärtige Eingangsseite (2) und eine stromabwärtige Ausgangsseite (3) aufweist und zum Fördern von Verpackungseinheiten in Förderrichtung (X) von der Eingangsseite (2) in Richtung der Ausgangsseite (3) eingerichtet ist;
und mit einem Verteilschwert (4), das sich im Wesentlichen in Förderrichtung (X) längs des Separierförderers (1) erstreckt und zum seitlichen Auslenken der Verpackungseinheiten eine erste Verstellrichtung (A) aufweist, bei welcher das Verteilschwert im Wesentlichen quer zur Förderrichtung (X) verstellbar ist,
**dadurch gekennzeichnet, dass** das Verteilschwert (4) eine zweite Verstellrichtung (B) aufweist, in welcher zumindest ein Abschnitt des Verteilschwerts (4) im Wesentlichen längs des Separierförderers (1) verstellbar ist.

2. Separierförderer (1) nach Anspruch 1, wobei das Verteilschwert (4) ein stromabwärtiges Ende (5) aufweist, an welchem das Verteilschwert (4) um eine senkrecht zur Förderebene ausgerichtete, beispielsweise mittig zur Quererstreckung des Separierförderers (1) angeordnete, Schwenkachse (Z) verschwenkbar fixiert ist, und ein zur Eingangsseite (2) weisendes stromaufwärtiges Ende (6) aufweist, welches gegenüber dem stromabwärtigen Ende (5) im Wesentlichen quer zur Förderrichtung (X) mittels eines Schwenkantriebs (7) verschwenkbar ist.

3. Separierförderer (1) nach Anspruch 1 oder 2, wobei das Verteilschwert (4) mittels eines Teleskopierantriebs (8) in Längsrichtung des Verteilschwerts (4) teleskopierbar ist.

4. Separierförderer (1) nach einem der vorangehenden Ansprüche, wobei das Verteilschwert (4) einen fixierten ersten Abschnitt (9) aufweist, welcher nicht in Längsrichtung verstellbar ist, und einen zweiten Abschnitt (10) aufweist, welcher gegenüber dem ersten Abschnitt (9) telekopierbar ist.

5. Separierförderer (1) nach Anspruch 4, wobei sich der fixierte erste Abschnitt (9) von der Schwenkachse (Z) stromaufwärts erstreckt und der telekopierbare zweite Abschnitt (10) in die Eingangsseite (2) des Separierförderers (1) mündet.

6. Separierförderer (1) nach einem der Ansprüche 2 bis 5, welcher ferner eine Steuerung aufweist, mittels welcher der Schwenkantrieb (7) so angesteuert ist, dass das Verteilschwert (4) zwischen einer ersten Stellung, in welcher das Verteilschwert (4) zu einer ersten Seite des Separierförderers (1) verschwenkt ist, und einer zweiten Stellung, in welcher das Verteilschwert (4) zu einer der ersten Seite des Separierförderers (1) gegenüberliegenden Seite verschwenkt ist, verstellbar ist.

7. Separierförderer (1) nach Anspruch 6, wobei der Teleskopierantrieb (8) mittels der Steuerung so angesteuert ist, dass das Verteilschwert (4) in der ersten und der zweiten Stellung eine erste Längserstreckung, und in einer zwischen der ersten und der zweiten Stellung gelegenen Position eine zweite Längserstreckung aufweist, welche sich von der ersten Längserstreckung unterscheidet.

8. Separierförderer (1) nach Anspruch 7, wobei die erste Längserstreckung größer ist als die zweite Längserstreckung des Verteilschwerts (4).

9. Separierförderer (1) nach einem der Ansprüche 3 bis 8, wobei der Teleskopierantrieb (8) eine konstante Teleskopiergeschwindigkeit aufweist.

10. Separierförderer (1) nach einem der vorangehenden Ansprüche, wobei das Verteilschwert (4) in Längsrichtung um einen Verstellweg zwischen 50-150 mm verstellbar ist.

11. Separierförderer (1) nach einem der Ansprüche 6 bis 10, wobei die Steuerung ferner dazu eingerichtet ist, eine Zuführgeschwindigkeit des dem Separierförderer (1) vorgeschalteten Taktförderers einzustellen.

12. Separierförderer (1) nach einem der Ansprüche 4 bis 11, wobei der zweite Verteilschwertabschnitt (10) entlang einer sich in Längsrichtung des Verteilschwerts (4) erstreckenden Führungsschiene (11) geführt ist.

13. Separierförderer (1) nach einem der Ansprüche 4 bis 12, wobei der zweite Verteilschwertabschnitt (10) über ein Verbindungsstück (12) mit dem Teleskopierantrieb (8) verbunden ist.

14. Separierförderer (1) nach Anspruch 13, wobei sich das Verbindungsstück (12) durch eine längliche Aussparung (13) einer Halterung (14) des Verteilschwerts (4) hindurcherstreckt und entlang der Aussparung (13) verfahrbar ist.

15. Separierförderer (1) nach einem der Ansprüche 3 bis 14, wobei der Teleskopierantrieb (8) eine Kolben-Zylinder-Einheit aufweist, welche als Elektrozylinder, als Pneumatikzylinder oder als Hydraulikzylinder ausgebildet ist.

## Geänderte Patentansprüche

### Geänderte Patentansprüche gemäss Regel 137(2) EPÜ.

1. Separierförderer (1) für einen Palettierer;
wobei der Separierförderer (1) eine stromaufwärtige Eingangsseite (2) und eine stromabwärtige Ausgangsseite (3) aufweist und zum Fördern von Verpackungseinheiten in Förderrichtung (X) von der Eingangsseite (2) in Richtung der Ausgangsseite (3) eingerichtet ist;
und mit einem Verteilschwert (4), das sich im Wesentlichen in Förderrichtung (X) längs des Separierförderers (1) erstreckt und zum seitlichen Auslenken der Verpackungseinheiten eine erste Verstellrichtung (A) aufweist, bei welcher das Verteilschwert im Wesentlichen quer zur Förderrichtung (X) verstellbar ist, wobei das Verteilschwert (4) eine zweite Verstellrichtung (B) aufweist, in welcher zumindest ein Abschnitt des Verteilschwerts (4) im Wesentlichen längs des Separierförderers (1) verstellbar ist, **dadurch gekennzeichnet, dass** durch ein Verstellen des zumindest einen Abschnitts in der zweiten Verstellrichtung (B) eine absolute Länge des zumindest einen Abschnitts veränderbar ist.

2. Separierförderer (1) nach Anspruch 1, wobei das Verteilschwert (4) ein stromabwärtiges Ende (5) aufweist, an welchem das Verteilschwert (4) um eine senkrecht zur Förderebene ausgerichtete, beispielsweise mittig zur Quererstreckung des Separierförderers (1) angeordnete, Schwenkachse (Z) verschwenkbar fixiert ist, und ein zur Eingangsseite (2) weisendes stromaufwärtiges Ende (6) aufweist, welches gegenüber dem stromabwärtigen Ende (5) im Wesentlichen quer zur Förderrichtung (X) mittels eines Schwenkantriebs (7) verschwenkbar ist.

3. Separierförderer (1) nach Anspruch 1 oder 2, wobei das Verteilschwert (4) mittels eines Teleskopierantriebs (8) in Längsrichtung des Verteilschwerts (4) teleskopierbar ist.

4. Separierförderer (1) nach einem der vorangehenden Ansprüche, wobei das Verteilschwert (4) einen fixierten ersten Abschnitt (9) aufweist, welcher nicht in Längsrichtung verstellbar ist, und einen zweiten Abschnitt (10) aufweist, welcher gegenüber dem ersten Abschnitt (9) telekopierbar ist.

5. Separierförderer (1) nach Anspruch 4, wobei sich der fixierte erste Abschnitt (9) von der Schwenkachse (Z) stromaufwärts erstreckt und der telekopierbare zweite Abschnitt (10) in die Eingangsseite (2) des Separierförderers (1) mündet.

6. Separierförderer (1) nach einem der Ansprüche 2 bis 5, welcher ferner eine Steuerung aufweist, mittels welcher der Schwenkantrieb (7) so angesteuert ist, dass das Verteilschwert (4) zwischen einer ersten Stellung, in welcher das Verteilschwert (4) zu einer ersten Seite des Separierförderers (1) verschwenkt ist, und einer zweiten Stellung, in welcher das Verteilschwert (4) zu einer der ersten Seite des Separierförderers (1) gegenüberliegenden Seite verschwenkt ist, verstellbar ist.

7. Separierförderer (1) nach Anspruch 6, wobei der Teleskopierantrieb (8) mittels der Steuerung so angesteuert ist, dass das Verteilschwert (4) in der ersten und der zweiten Stellung eine erste Längserstreckung, und in einer zwischen der ersten und der zweiten Stellung gelegenen Position eine zweite Längserstreckung aufweist, welche sich von der ersten Längserstreckung unterscheidet.

8. Separierförderer (1) nach Anspruch 7, wobei die erste Längserstreckung größer ist als die zweite Längserstreckung des Verteilschwerts (4).

9. Separierförderer (1) nach einem der Ansprüche 3 bis 8, wobei der Teleskopierantrieb (8) eine konstante Teleskopiergeschwindigkeit aufweist.

10. Separierförderer (1) nach einem der vorangehenden Ansprüche, wobei das Verteilschwert (4) in Längsrichtung um einen Verstellweg zwischen 50-150 mm verstellbar ist.

11. Separierförderer (1) nach einem der Ansprüche 6 bis 10, wobei die Steuerung ferner dazu eingerichtet ist, eine Zuführgeschwindigkeit des dem Separierförderer (1) vorgeschalteten Taktförderers einzustellen.

12. Separierförderer (1) nach einem der Ansprüche 4 bis 11, wobei der zweite Verteilschwertabschnitt (10) entlang einer sich in Längsrichtung des Verteilschwerts (4) erstreckenden Führungsschiene (11) geführt ist.

13. Separierförderer (1) nach einem der Ansprüche 4 bis 12, wobei der zweite Verteilschwertabschnitt (10) über ein Verbindungsstück (12) mit dem Teleskopierantrieb (8) verbunden ist.

14. Separierförderer (1) nach Anspruch 13, wobei sich das Verbindungsstück (12) durch eine längliche Aussparung (13) einer Halterung (14) des Verteilschwerts (4) hindurcherstreckt und entlang der Aussparung (13) verfahrbar ist.

15. Separierförderer (1) nach einem der Ansprüche 3 bis 14, wobei der Teleskopierantrieb (8) eine Kolben-Zylinder-Einheit aufweist, welche als Elektrozylinder, als Pneumatikzylinder oder als Hydraulikzylinder ausgebildet ist.
